# EUROPÄISCHE PATENTSCHRIFT

(11) **EP 0 925 614 B1**
(45) Veröffentlichungstag und Bekanntmachung des Hinweises auf die Patenterteilung: **07.06.2000**
(21) Anmeldenummer: 97941852.2
(22) Anmeldetag: 29.08.1997
(51) Int. Cl.: H01M 8/04

(54) **VERFAHREN ZUM BETREIBEN EINER BRENNSTOFFZELLENANLAGE UND BRENNSTOFFZELLENANLAGE**
PROCESS FOR OPERATING A FUEL CELL SYSTEM AND FUEL CELL SYSTEM
PROCEDE PERMETTANT DE FAIRE FONCTIONNER UNE INSTALLATION A PILES A COMBUSTIBLE, ET INSTALLATION A PILES A COMBUSTIBLE CONCERNEE

(30) Priorität: 11.09.1996 DE 19636908
(43) Veröffentlichungstag der Anmeldung: 30.06.1999
(73) Patentinhaber: SIEMENS AKTIENGESELLSCHAFT, 80333 München (DE)
(72) Erfinder: STÜHLER, Walter, D-96114 Hirschaid (DE); STENGER, Herbert, D-90559 Burgthann (DE); GELLERT, Harry, D-91090 Effeltrich (DE)
(86) Internationale Anmeldenummer: DE9701891
(87) Internationale Veröffentlichungsnummer: WO9811617

(56) Entgegenhaltungen:
- WO-A-97/10619
- US-A- 5 192 627
- PATENT ABSTRACTS OF JAPAN vol. 095, no. 003, 28.April 1995 & JP 06 333583 A (FUJI ELECTRIC CO LTD), 2.Dezember 1994,

## Beschreibung

Die Erfindung bezieht sich auf ein Verfahren zum Betreiben einer Brennstoffzellenanlage und eine Brennstoffzellenanlage.

Es ist bekannt, daß bei der Elektrolyse von Wasser die Wassermoleküle durch elektrischen Strom in Wasserstoff und Sauerstoff zerlegt werden. In der Brennstoffzelle läuft dieser Vorgang in umgekehrter Richtung ab. Bei der elektrochemischen Verbindung von Wasserstoff und Sauerstoff zu Wasser entsteht elektrischer Strom mit hohem Wirkungsgrad und, wenn als Brenngas reiner Wasserstoff eingesetzt wird, ohne Emission von Schadstoffen und Kohlendioxid. Auch mit technischen Brenngasen, beispielsweise Erdgas oder Kohlegas, und mit Luft oder mit mit O₂ angereicherter Luft anstelle von reinem Sauerstoff, erzeugt eine Brennstoffzelle deutlich weniger Schadstoffe und weniger CO₂ als andere Energieerzeuger, die mit fossilen Energieträgern arbeiten. Die technische Umsetzung des Prinzips der Brennstoffzelle hat zu sehr unterschiedlichen Lösungen, und zwar mit verschiedenartigen Elektrolyten und mit Betriebstemperaturen zwischen 80° C und 1000° C, geführt.

Ein Brennstoffzellenblock, der in der Fachliteratur auch "stack" genannt wird, setzt sich in der Regel aus einer Vielzahl aufeinander gestapelter Brennstoffzellen zusammen.

Als problematisch erweist sich die Befeuchtung und Verdichtung der Prozeßgase vor dem Eintritt in den Brennstoffzellenblock, da die Verdampfungsenthalpie für die Befeuchtung bereitgestellt werden muß. Aus der Literatur sind Vorrichtungen mit Membranbefeuchtung oder Wassereinspritzung nach der Verdichtung, beispielsweise aus dem Deutschen Patent DE 43 18 818, bekannt.

Außerdem ist aus der internationalen Anmeldung WO 97/10619 ein Verfahren zum Betreiben einer Brennstoffzellenanlage mit wenigstens einem Brennstoffzellenblock bekannt, bei dem wenigstens ein Betriebsmittel/Prozeßgas für den Brennstoffzellenblock mittels eines Flüssigkeitsringverdichters verdichtet wird. Nach dem Verdichten wird Wasser aus dem Betriebsmittel abgeschieden und über einen Produktwasserbehälter dem Kühlkreislauf der Brennstoffzellenanlage zugeführt.

Als nachteilig erweist sich bei den aus dem Stand der Technik bekannten Verfahren, daß für verschiedene Verfahrensschritte, beispielsweise für die Abscheidung von Wasser aus einem Prozeßgas für den Brennstoffzellenblock, für die Bereitstellung des Kühlwassers für den Brennstoffzellenblock und der Betriebsflüssigkeit für den Flüssigkeitsringverdichter, ein aufwendiger Aufbau der Brennstoffzellenanlage notwendig ist. Aufwendiger Aufbau heißt mit anderen Worten, daß für die verschiedenen Verfahrensschritte einzelne Komponenten in der Brennstoffzellenanlage bereitgestellt werden müssen, was wiederum mit einem großen finanziellen Aufwand verbunden ist.

Des weiteren bedeutet eine größere Anzahl von Komponenten in der Brennstoffzellenanlage zugleich einen größeren Aufwand zum Steuern und Regeln der einzelnen Komponenten.

Der Erfindung liegt nun die Aufgabe zugrunde, ein Verfahren zum Betreiben einer Brennstoffzellenanlage anzugeben, wobei die Anzahl der die Brennstoffzellenanlage aufbauenden Komponenten reduziert und somit die Kosten für die Brennstoffzellenanlage gesenkt werden und zugleich ein verfahrensrelevanter Vorteil erzielt werden. Außerdem soll eine Brennstoffzellenanlage zur Durchführung des Verfahrens angegeben werden.

Die erstgenannte Aufgabe wird gelöst durch ein Verfahren zum Betreiben einer Brennstoffzellenanlage mit wenigstens einem Brennstoffzellenblock, wobei wenigstens ein Betriebsmittel für den Brennstoffzellenblock mit einem Flüssigkeitsringverdichter verdichtet wird und nach dem Verdichten Wasser in einer Vorrichtung zum Abscheiden von Wasser aus dem Betriebsmittel abgeschieden und zum Kühlen des Brennstoffzellenblocks verwendet wird, wobei gemäß der Erfindung das Wasser nach dem Kühlen wenigstens teilweise in die Vorrichtung rückgespeist wird.

Die zweitgenannte Aufgabe wird gelöst durch eine Brennstoffzellenanlage mit wenigstens einem Brennstoffzellenblock und wenigstens einem Flüssigkeitsringverdichter zum Verdichten eines Betriebsmittels für den Brennstoffzellenblock, bei der eine Vorrichtung zum Abscheiden von Wasser in einem Zuweg zum Versorgen des Brennstoffzellenblocks mit einem Betriebsmittel zwischen dem Flüssigkeitsringverdichter und dem Brennstoffzellenblock angeordnet ist, wobei gemäß der Erfindung eine Leitung zwischen dem Brennstoffzellenblock und der Vorrichtung angeordnet ist, über welche das Wasser zum Kühlen des Brennstoffzellenblocks nach dem Durchströmen desselbigen teilweise in die Vorrichtung eingespeist wird.

Bei dieser Brennstoffzellenanlage zum Durchführen dieses Verfahrens wird somit eine Vorrichtung verwendet, die zwei Schritte des Verfahrens, nämlich das Abscheiden von Wasser aus einem Betriebsmittel für den Brennstoffzellenblock nach dem Verdichten und das Zurverfügungstellen von Wasser zum Kühlen des Brennstoffzellenblocks, zugleich durchführt. Dadurch werden nicht mehr, wie aus dem Stand der Technik bekannt, wenigstens zwei Vorrichtungen zum Durchführen dieser beiden Verfahrensschritte verwendet. Es reduziert sich die Anzahl der die Brennstoffzellenanlage aufbauenden Komponenten, womit zugleich die Kosten für die Brennstoffzellenanlage reduziert werden. Außerdem wird der Regelaufwand für die Brennstoffzellenanlage verringert, womit zugleich ein verfahrensrelevanter Vorteil erzielt wird.

Vorzugsweise wird das Wasser zum Kühlen des Brennstoffzellenblocks der Brennstoffzellenanlage nach dem Durchströmen desselbigen zum Betreiben des Flüssigkeitsringverdichters verwendet. Durch diese Maßnahme wird gewährleistet, daß die Befeuchtung des Betriebsmittels für den Brennstoffzellenblock bei der Arbeitstemperatur des Brennstoffzellenblocks erfolgt. Hierdurch wird eine Austrocknung der Membranen im Brennstoffzellenblock vermieden. Außerdem erfolgt eine Abführung der Reaktionsenthalpie aus dem Wasser zum Kühlen des Brennstoffzellenblocks zusätzlich durch Verdampfung bei der Befeuchtung des Betriebsmittels im Flüssigkeitsringverdichter. Da zum Betreiben des Flüssigkeitsringverdichters das Wasser zum Kühlen des Brennstoffzellenblocks verwendet wird, welches durch die Vorrichtung bereitgestellt wird, wird keine zusätzliche Komponente für den Betrieb des Brennstoffzellenblocks benötigt.

In einer weiteren Ausgestaltung wird das Wasser zum Kühlen des Brennstoffzellenblocks nach dem Durchströmen desselbigen aus dem Brennstoffzellenblock über eine Leitung teilweise in den Flüssigkeitsringverdichter eingespeist. Ein weiterer Teil des Wassers zum Kühlen des Brennstoffzellenblocks wird somit zum Betreiben des Flüssigkeitsringverdichters verwendet.

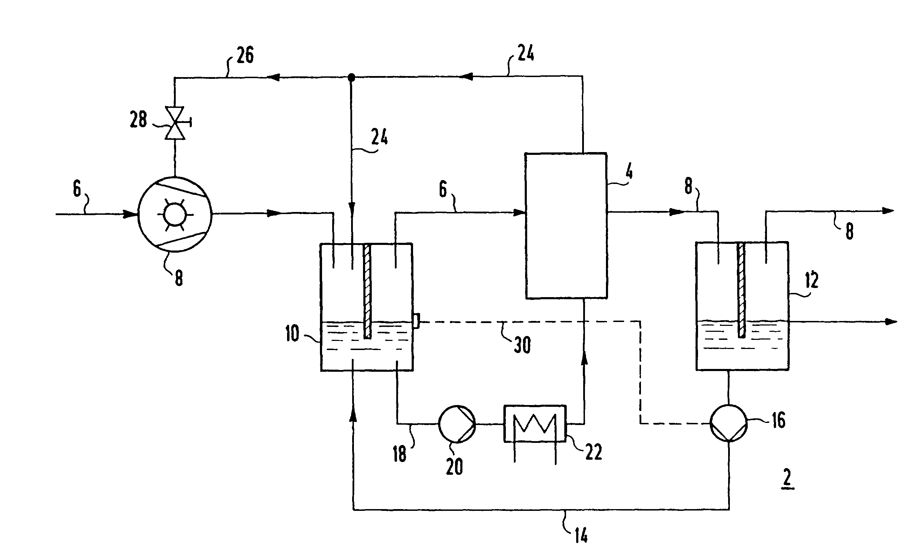

Zur weiteren Erläuterung der Erfindung wird auf das Ausführungsbeispiel der Zeichnung verwiesen, in deren einziger Figur eine Brennstoffzellenanlage mit wenigstens einem Brennstoffzellenblock und wenigstens einem Flüssigkeitsringverdichter schematisch dargestellt ist.

Gemäß der Figur umfaßt eine Brennstoffzellenanlage 2 einen Brennstoffzellenblock 4, der sich aus einer Vielzahl aufeinandergestapelter Brennstoffzellen zusammensetzt.

Über einen Zuweg 6, beispielsweise einen Anoden- oder einen Kathodenzuweg, wird der Brennstoffzellenblock 4 mit einem Betriebsmittel gespeist. Bei dem Betriebsmittel handelt es sich beispielsweise um Sauerstoff (O₂), Umgebungsluft, oder Wasserstoff (H₂). In dem Zuweg 6 sind in Strömungsrichtung der Reihenfolge nach ein Flüssigkeitsringverdichter 8 und eine Vorrichtung 10 angeordnet.

Die Vorrichtung 10 zum Abscheiden von Wasser aus dem Betriebsmittel nach dem Verdichten im Flüssigkeitsringverdichter 8 und zum Kühlen des Brennstoffzellenblocks 4, ist somit in dem Zuweg 6 zwischen dem Flüssigkeitsringverdichter 8 und dem Brennstoffzellenblock 4 der Brennstoffzellenanlage 2 angeordnet.

Nach erfolgter Reaktion in dem Brennstoffzellenblock 4 wird das nicht verbrauchte und mit Prozeßwasser angereicherte Betriebsmittel über einen Abweg 8 aus dem Brennstoffzellenblock 4 abgeführt. In dem Abweg 8 des Brennstoffzellenblocks 4 ist ein Prozeßwasser-Abscheider 12 angeordnet. Das aus dem nicht verbrauchten Betriebsmittel abgeschiedene Prozeßwasser wird über eine Leitung 14, in der eine Pumpe 16 angeordnet ist, in die Vorrichtung 10 eingespeist. Die Menge des eingespeisten Prozeßwassers hängt dabei vom Wasserstand in der Vorrichtung 10 ab.

Aus der Vorrichtung 10 wird Wasser zum Kühlen des Brennstoffzellenblocks 4 über eine Leitung 18 in denselbigen eingespeist. In der Leitung 18 sind in Strömungsrichtung der Reihenfolge nach eine Pumpe 20 und ein Wärmetauscher 22 zum Abkühlen des Wassers angeordnet.

Das Wasser zum Kühlen des Brennstoffzellenblocks 4 wird nach Durchströmen desselbigen teilweise über eine Leitung 24 wiederum in die Vorrichtung 10 eingespeist. Durch diese Maßnahme wir das Wasser erneut zum Kühlen des Brennstoffzellenblocks 4 verwendet werden.

Außerdem wird das Wasser zum Kühlen des Brennstoffzellenblocks 4 nach Durchströmen desselbigen teilweise über eine Leitung 26, welche aus der Leitung 24 zwischen dem Brennstoffzellenblock 4 und der Vorrichtung 10 abzweigt, dem Flüssigkeitsringverdichter 8 zum Betreiben desselbigen zur Verfügung gestellt. In dieser Leitung 26 ist ein Ventil 28 zum Regeln der Wasserzufuhr für den Flüssigkeitsringverdichter 8 angeordnet. Somit wird das Wasser zum Betreiben des Flüssigkeitsringverdichters 8 aus der Vorrichtung 10 zur Verfügung gestellt.

Die Vorrichtung 10 ist somit zum Durchführen verschiedener Verfahrensschritte zum Betreiben der Brennstoffzellenanlage 2 geeignet. Zum einen wird Wasser aus dem Betriebsmittel zum Betreiben des Brennstoffzellenblocks 4 nach dem Verdichten abgeschieden, andererseits wird Wasser zum Kühlen des Brennstoffzellenblocks 4 bereitgestellt und außerdem wird das Wasser zum Kühlen des Brennstoffzellenblocks 4 aus der Vorrichtung 10 nach Durchströmen des Brennstoffzellenblocks 4 zum Betreiben des Flüssigkeitsringverdichters 8 verwendet.

Durch diese Maßnahme wird erreicht, daß nur eine Vorrichtung 10 zum Durchführen dieser Verfahrensschritte verwendet wird. Dadurch wird die Anzahl der Komponenten in der Brennstoffzellenanlage 2 verringert, was zugleich mit einer Reduzierung der Kosten für die Brennstoffzellenanlage 2 verbunden ist. Durch die Verringerung der Anzahl der die Brennstoffzellenanlage 2 aufbauenden Komponenten wird zugleich der Steuer- und Regelungsaufwand für die Brennstoffzellenanlage 2 verringert.

Außerdem wird das Betriebsmittel zum Betreiben des Brennstoffzellenblocks 4 immer bei der Arbeitstemperatur des Brennstoffzellenblocks 4 befeuchtet, wodurch eine Austrocknung der Membranen vermieden wird.

Über eine Signalleitung 30 kann der Wasserstand der Vorrichtung 10 als Signal auf die Pumpe 16 in der Leitung 14 geschaltet werden, wodurch erreicht wird, daß immer ausreichend Prozeßwasser aus dem Prozeßwasser-Abscheider 12 über die Leitung 14 in die Vorrichtung 10 eingespeist wird, so daß ausreichend Wasser zum Kühlen des Brennstoffzellenblocks 4 und zum Betreiben des Flüssigkeitsringverdichters 8 in der Vorrichtung 10 vorhanden ist.

## Patentansprüche

1. Verfahren zum Betreiben einer Brennstoffzellenanlage (2) mit wenigstens einem Brennstoffzellenblock (4), wobei wenigstens ein Betriebsmittel für den Brennstoffzellenblock (4) mit einem Flüssigkeitsringverdichter (8) verdichtet und nach dem Verdichten Wasser in einer Vorrichtung (10) zum Abscheiden von Wasser aus dem Betriebsmittel abgeschieden und zum Kühlen des Brennstoffzellenblocks (4) verwendet wird,
**dadurch gekennzeichnet**, daß das Wasser nach dem Kühlen wenigstens teilweise in die Vorrichtung (10) rückgespeist wird.

2. Verfahren nach Anspruch 1,
**dadurch gekennzeichnet**, daß Prozeßwasser aus dem Brennstoffzellenblock (4) wenigstens teilweise zum Kühlen des Brennstoffzellenblocks (4) verwendet wird.

3. Brennstoffzellenanlage (2) mit wenigstens einem Brennstoffzellenblock (4) und wenigstens einem Flüssigkeitsringverdichter (8) zum Verdichten eines Betriebsmittels für den Brennstoffzellenblock (4), bei der eine Vorrichtung (10) zum Abscheiden von Wasser in einem Zuweg (6) zum Versorgen des Brennstoffzellenblocks (4) mit einem Betriebsmittel zwischen dem Flüssigkeitsringverdichter (8) und dem Brennstoffzellenblock (4) angeordnet ist, **dadurch gekennzeichnet**, daß eine Leitung (24) zwischen dem Brennstoffzellenblock (4) und der Vorrichtung (10) angeordnet ist, über welche das Wasser zum Kühlen des Brennstoffzellenblocks (4) nach dem Durchströmen desselbigen wenigstens teilweise in die Vorrichtung (10) rückgespeist wird.

4. Brennstoffzellenanlage (2) nach Anspruch 3,
**dadurch gekennzeichnet**, daß eine Leitung (14) zum Einspeisen von Prozeßwasser aus einem Prozeßwasser-Abscheider (12) des Brennstoffzellenblocks (4) in die Vorrichtung (10) vorgesehen ist.

5. Brennstoffzellenanlage (2) nach einem der Ansprüche 3 oder 4, **dadurch gekennzeichnet**, daß eine Leitung (26) zum Einspeisen eines Anteils von Wasser in den den Flüssigkeitsringverdichter (8) vorgesehen ist, die aus der Leitung (24) abzweigt und in denselbigen mündet.

## Claims

1. Method for operating a fuel cell system (2) having at least one fuel cell block (4), at least one agent for the fuel cell block (4) being compressed by a liquid ring compressor (8) and, after compression, water being deposited in an apparatus (10) for separating water from the agent, and being used to cool the fuel cell block (4),
characterized in that, at least part of the water is fed back into the apparatus (10), after cooling.

2. Method according to Claim 1,
characterized in that at least part of the process water from the fuel cell block (4) is used to cool the fuel cell block (4).

3. Fuel cell system (2) having at least one fuel cell block (4) and having at least one liquid ring compressor (8) for compressing an agent for the fuel cell block (4), in which an apparatus (10) for water separation is arranged in-between the liquid ring compressor (8) and the fuel cell block (4) in a feed path (6) for supplying the fuel cell block (4) with an agent, characterized in that a pipe (24) is arranged between the fuel cell block (4) and the apparatus (10), via which pipe at least part of the water is fed back into the apparatus (10) after flowing through the fuel cell block (4), in order to cool the fuel cell block (4).

4. Fuel cell system (2) according to Claim 3,
characterized in that a pipe (14) is provided for feeding process water from a process water separator (12) of the fuel cell block (4) into the apparatus (10).

5. Fuel cell system (2) according to one of Claims 3 or 4, characterized in that a pipe (26) is provided for feeding some of the water into the liquid ring compressor (8), which pipe (26) branches off the pipe (24) and opens into said liquid ring compressor (8).

## Revendications

1. Procédé permettant de faire fonctionner une installation (2) de piles à combustible ayant au moins un bloc (4) de piles à combustible, au moins un agent de fonctionnement du bloc (4) de piles à combustible étant comprimé par un compresseur (8) à anneau de liquide et, après la compression, de l'eau étant séparée dans un dispositif (10) de séparation d'eau de l'agent de fonctionnement et étant utilisée pour refroidir le bloc (4) de piles à combustible, caractérisé en ce qu'il consiste à retourner l'eau après le refroidissement au moins en partie au dispositif (10).

2. Procédé suivant la revendication 1,
caractérisé en ce qu'il consiste à utiliser l'eau du procédé provenant du bloc (4) de piles à combustible au moins en partie pour refroidir le bloc (4) de piles à combustible.

3. Installation (2) à piles à combustible, ayant au moins un bloc (4) de piles à combustible et au moins un compresseur (8) à anneau de liquide destiné à comprimer un agent de fonctionnement pour le bloc (4) de piles à combustible, dans laquelle un dispositif (10) de séparation de l'eau est monté dans une entrée (6) d'alimentation du bloc (4) de piles à combustible en un agent de fonctionnement entre le compresseur (8) à anneau de liquide et le bloc (4) de piles à combustible, caractérisé en ce qu'il est monté, entre le bloc (4) de piles à combustible et le dispositif (4), un conduit (24) par lequel l'eau pour le refroidissement du bloc (4) de piles à combustible est retournée, après être passée dans celui-ci, au moins en partie au dispositif (4).

4. Installation (2) de piles à combustible suivant la revendication 3, caractérisé en ce qu'il est prévu un conduit (14) pour envoyer de l'eau du procédé d'un séparateur (12) d'eau de procédé du bloc (4) de piles à combustible au dispositif (10).

5. Installation (2) de piles à combustible suivant une des revendications 3 ou 4, caractérisée en ce qu'il est prévu un conduit (26) pour envoyer une partie de l'eau dans le compresseur (8) à anneau de liquide, ce conduit étant en dérivation du conduit (24) et débouchant dans celui-ci.
